# EUROPEAN PATENT APPLICATION

(11) **EP 2 072 809 A1**
(43) Date of publication of application: **24.06.2009**
(21) Application number: 07024838.0
(22) Date of filing: 20.12.2007
(51) Int. Cl.: F02N 17/08, F02B 21/00, F02N 9/04, F02M 63/00

(54) **Combustion engine and start system therefore**

(71) Applicant: GM Global Technology Operations, Inc., Detroit, MI 48265-3000 (US)
(72) Inventor: Cipolla, Giovanni, 10122 Torino (IT)
(74) Representative: Strauss, Peter

(57) **Abstract**

A start assist system for a self-igniting combustion engine comprises a pressurized fuel container (21) and a first valve array (22) for supplying fuel to a combustion chamber (2) of the engine (1). The first valve array (22) is adapted to admit pressurized fluid into the pressurized fuel container (21).

## Description

The present invention relates to a start system for a combustion engine, in particular for re-starting of a warm engine and to a combustion engine system comprising the combustion engine and its associated start system.

DE 196 00 027 A1 discloses a start system for a combustion engine, specifically a Diesel engine, which comprises a pressurized container for a start assist fuel, such as ether, and a propellant, which container is removably connected to an air intake manifold of the Diesel engine. A control valve between the pressurized container and the intake manifold allows to control the introduction of the start assist fuel into the intake manifold.

Since the ether evaporates and ignites more easily at low temperatures than Diesel fuel, it may effectively shorten the time from the instant the engine is switched on to self-powered operation. However, the solution has various inconveniences. One of these is that since the chemical composition of the fuel in the combustion chambers varies during an early phase of the engine operation, it is difficult to control the combustion so that a low pollutant concentration in the exhaust gas is achieved. Another inconvenient is that the system ceases to operate if the start assist fuel or the propellant in the pressurized container is exhausted or low. If the use of an expensive pressure reduction valve between the container and the intake manifold is to be avoided, the pressure in the container must be substantially independent of the amount of propellant contained. Just as in conventional spray cans, this requires the use of a propellant capable of forming a liquid phase in the container. The pressure of such a propellant depends strongly on temperature, so there is a further problem in that the system tends to become inoperative at very low temperatures, when it is needed most.

The object of the present invention is to provide a start system for a combustion engine in which the risk of malfunction due to insufficient pressure in the pressurized fuel container is removed or at least substantially reduced.

This object is achieved by a start system for a self-igniting combustion engine comprising a pressurized fuel container and a first valve array for supplying fuel to the combustion chamber of the engine, wherein the first valve array is to admit pressurized fluid into the pressurized fuel container. In this way, sufficient operating pressure in the pressurized fuel container can be restored if necessary whenever the engine is operating, by extracting pressurized fluid, which is present in the engine under operation, and supplying it to the pressurized fuel container.

In an engine system comprising the start assist system and a combustion engine associated to it, the chemical nature of the pressurized fluid might be different from the fuel in the container, provided that the design of the container assures that only the fuel but not the pressurized fluid is supplied from the container of the engine during an engine start. Preferably, the pressurized fluid is fuel. This feature not only allows for a simple design of the container and its associated valve array; it also removes the risk of the container running out of fuel.

The first valve array preferably comprises a first externally controlled valve for supplying the pressurized fluid fuel from the pressurized fuel container to the combustion chamber and a first unidirectional valve for admitting the pressurized fluid into the container. Under these circumstances, an internal pressure of the pressurized fuel container, which has decreased due to fuel being supplied to the engine, will be restored automatically as soon as the fluid at an input side of the unidirectional valve has reached a pressure level above the internal pressure of the container.

The start assist system further preferably comprises a pressurized oxidant container and a second valve for supplying said pressurized oxidant to said combustion chamber. By supplying both pressurized fuel and oxidant to the combustion chamber, an ignitable mixture can be generated in the combustion chamber nearly instantaneously.

To this end, the second valve array preferably comprises a second externally controlled valve for supplying the pressurized oxidant to the engine and a second unidirectional valve for admitting pressurized air as said oxidant into the pressurized oxidant container. By deriving the pressurized air from the engine under operation and storing it in the pressurized oxidant container, there is no risk of the container running out of supply.

Preferably, at least one of the externally controlled valves is a solenoid valve, and at least one of the unidirectional valves is a reed valve.

In an engine system comprising a combustion engine and the above-described start system, the first valve array is preferably connected to a fuel supply rail, which is further connected to an output port of a fuel pump in order to receive pressurized fuel, and to at least one fuel injector valve associated to a combustion chamber of the engine.

The start system is very beneficial in a hybrid engine system, since in such a system the combustion engine is stopped frequently for short times, and the start system facilitates greatly re-starting the combustion engine.

As a source for pressurized air, the combustion engine system further preferably comprises a compressor. An intake manifold extending between an output port of the compressor and a combustion chamber of the engine may have the second valve array connected to it.

Further features and advantages of the invention become apparent from the subsequent description of embodiments thereof referring to the appended drawings.
- Fig. 1: is a schematic diagram of a combustion engine system according to the invention; and
- Fig. 2: is a valve array of the combustion engine system.

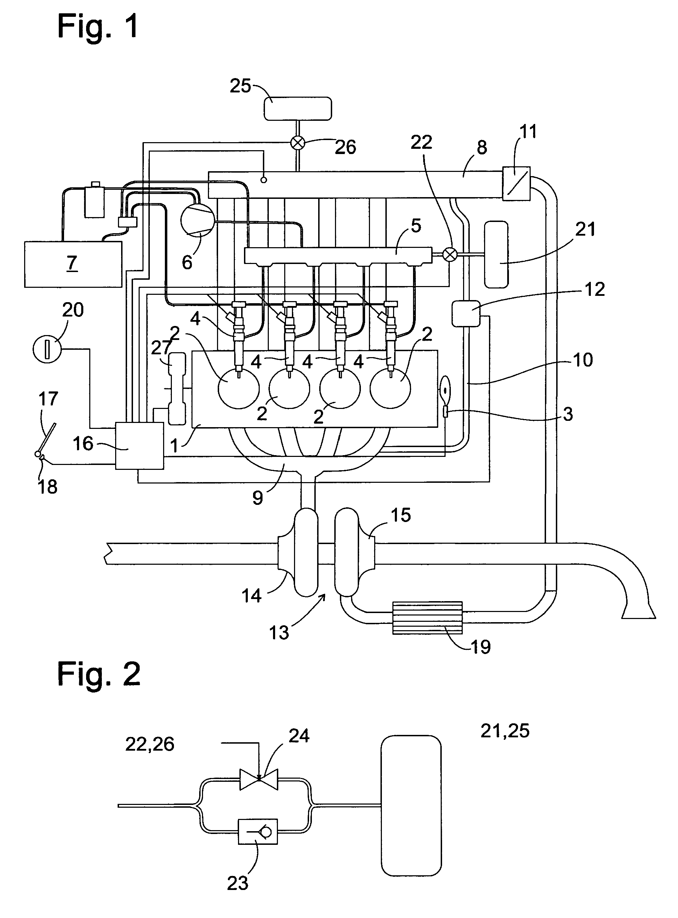

The Diesel engine system of Fig. 1 comprises an engine block 1 having a plurality of cylinders 2 formed in it. The cylinders 2 drive a crankshaft, not shown, the angular position and/or rotation speed of which is detected by a crankshaft sensor 3. Each cylinder 2 has a fuel injection valve 4 associated to it for injecting fuel from a common fuel rail 5. The fuel rail 5 is pressurized by a fuel pump 6 which draws fuel from a tank 7. An auxiliary fuel container 21 is connected to the fuel rail 5 by a valve array 22. As shown in detail in Fig. 2, the valve array 22 comprises a reed valve 23 through which fuel flows from the fuel rail 5 into the auxiliary container 21 whenever the pressure in the auxiliary container 21 is lower than in the fuel rail 5, and, in parallel thereto, a solenoid valve 24.

The cylinders 2 are connected to a fresh air intake manifold 8 and to an exhaust manifold 9 by conventional intake and exhaust valves, not shown. An exhaust gas reduction channel 10 forms a flow path between the exhaust manifold 9 and the intake manifold 8. It joins the intake manifold 8 at a downstream side of a throttle 11. An exhaust gas reduction valve (EGR valve) 12 is located in the channel 10. The intake manifold 8 has an auxiliary air container 25 connected to it via a valve array 26. Similar to valve array 22 and as shown in Fig. 2, valve array 26 comprises a reed valve 23 which will admit pressurized air from intake manifold 8 to auxiliary container 25 whenever the pressure in the auxiliary container 25 is less than in intake manifold 8, and, in parallel thereto, a solenoid valve 24.

A turbocharger 13 comprises a turbine 14 located at a downstream end of the exhaust manifold 9 and driven by the flow of exhaust gas from the cylinders 2, and a compressor 15 which is driven by turbine 14 to compress fresh air emitted into intake manifold 8 via an intercooler 19.

An electronic controller 16 controls the flow of exhaust gas through EGR valve 12 and the fuel injection timings and quantities at injection valves 4 based on the position of accelerator pedal 17 detected by sensor 18, the crankshaft rotation speed detected by sensor 3, and, if appropriate, other parameters.

The electronic controller 16 is further connected to an ignition key lock 20, in order to detect a driver's whish to start the engine system by turning a key in lock 20.

An electric motor 27 is coupled to the crankshaft of the Diesel engine.

According to a first embodiment of the invention, in the instant the key is turned, both auxiliary containers 21, 25 are at a high pressure corresponding to the output pressure of the fuel pump 6 and the compressor 15, respectively, in a previous steady state of operation of the engine system. The controller 16, upon detecting turning of the lock 20, powers an electric motor connected to the crankshaft of engine block 1, so that the crankshaft starts to rotate, and simultaneously opens the solenoid valves 24 of the valve arrays 22, 26. This causes the pressure in intake manifold 8 to increase substantially above atmospheric level, although compressor 15 has not yet started to operate. In this way, a large amount of fresh air is supplied to the cylinders from the very beginning of the engine operation, although the engine itself is not yet capable of providing the power needed for compressing the air. Similarly, by the controller 16 opening the solenoid valve of array 22, fuel is available at a high pressure in the fuel rail 5 almost instantaneously, although the fuel pump 6 may not yet be running at its rated speed. Since the fuel in fuel rail 5 is practically incompressible, only a minimal amount of fuel must be transferred from the auxiliary container 21 to the fuel rail 5 in order to increase its pressure to the steady state value it has at normal operation.

When the engine system is operating steadily, the compressor 15 is working and the fuel pump 6 is running at its rated speed, air and fuel from the containers 25 and 21, respectively, which have been consumed during the starting procedure are replaced by air and fuel which flow back to the containers 25, 21 via the reed valves 23. Thus air and fuel are stored at high pressure in the containers 25, 21 until the next start of the engine.

Since the containers 25, 21 are automatically refilled when the engine is running, the amounts of air and fuel stored therein need not be substantially more than what is used in a single starting procedure. The containers may therefore have a very moderate size, so that it is not difficult to fit them into an engine compartment of a motor vehicle.

According to a second embodiment, a storage capacity of the pressurized air container 25 is large enough so that by simply introducing, upon an engine start, the pressurized air from container 25 into combustion chambers 2, the pressure in the combustion chambers 2 is sufficient to rotate the crankshaft. In that case, electric motor 27 is not required for starting the diesel engine.

According to a third embodiment, the Diesel engine of fig. 1 is part of a hybrid engine system, in combination with an electric motor which is powerful enough to drive the vehicle in case the Diesel engine is off. This powerful electric motor may be the motor 27 shown in fig. 1. It is a characteristic of hybrid systems that depending on driving conditions the combustion engine is frequently switched-off for short periods of time, and that in these periods driving power is supplied by the electric motor. In such a hybrid system, the above described setup for restarting the combustion engine is extremely useful. In this embodiment, the electronic controller 16 further has the task of deciding when the Diesel engine is switched on or off. Any conventional strategy can be used for this decision, so that it will not be described here. Whenever the controller 16 decides to switch on the Diesel engine, it controls the solenoid valves 24 of the valve arrays 22, 26 in the way described above for the first embodiment. The electric motor 27 may operate at that time, helping to start the Diesel engine, or it may be uncoupled from the crankshaft, so that the process of starting the diesel engine relies exclusively on the pressurized media in containers 21, 25.

### List of reference signs

engine block 1
cylinders 2
crankshaft sensor 3
fuel injection valve 4
fuel rail 5
fuel pump 6
tank 7
intake manifold 8
exhaust manifold 9
EGR channel 10
throttle 11
EGR valve 12
turbocharger 13
turbine 14
compressor 15
electronic controller 16
accelerator pedal 17
sensor 18
intercooler 19
ignition key lock 20
auxiliary fuel container 21
valve array 22
reed valve 23
solenoid valve 24
auxiliary air container 25
valve array 26

## Claims

1. Start system for a self-igniting combustion engine comprising a pressurized fuel container (21) and a first valve array (22) for supplying fuel to a combustion chamber (2) of the engine (1), **characterized in that** the first valve array (22) is adapted to admit pressurized fluid into the pressurized fuel container (21).

2. The start system of claim 1, wherein the first valve array (22) comprises a first externally controlled valve (24) for supplying pressurized fuel from the pressurized fuel container (21) to the combustion chamber (2) and a first unidirectional valve (23) for admitting the pressurized fluid into the container (21).

3. The start system of claim 2, wherein the first externally controlled valve (24) and the first unidirectional valve (23) are connected in parallel.

4. The start system of any of the preceding claims, further comprising a pressurized oxidant container (25) and a second valve array (26) for supplying said pressurized oxidant to said combustion chamber (2).

5. The start system of claim 4, wherein the second valve array (26) comprises a second externally controlled valve (24) for supplying the pressurized oxidant to the engine and a second unidirectional valve (23) for admitting pressurized air as said oxidant into the pressurized oxidant container (25).

6. The start system of claim 2, 3 or 5, wherein at least one of said externally controlled valves is a solenoid valve (24).

7. The start system of any of claims 2, 3, 5, 6, wherein at least one of said unidirectional valves is a reed valve (23).

8. An engine system comprising an internal combustion engine (1) and the start system of any of the preceding claims.

9. The engine system of claim 8, wherein the pressurized fluid is fuel.

10. The engine system of claim 9, wherein a fuel supply rail (5) has connected to it an output port of a fuel pump (6), at least one fuel injector valve (4) associated to a combustion chamber (2) of the engine (1), and said first valve array (22).

11. The engine system of claim 8, **characterized in that** it is a hybrid system.

12. The combustion engine system of any of claims 8 to 11, further comprising a compressor (15).

13. The combustion engine system of claim 12, wherein an intake air manifold extends (8) between an output port of the compressor (15) and a combustion chamber (2) of the engine (1), the second valve array (26) being connected to the intake air manifold (8).
